# FASCICULE DE BREVET EUROPEEN

(11) **EP 2 071 657 B1**
(45) Date de publication et mention de la délivrance du brevet: **12.05.2010**
(21) Numéro de dépôt: 08305849.5
(22) Date de dépôt: 27.11.2008
(51) Int. Cl.: H01M 10/0525, H01M 10/052

(54) **Dispositif électrochimique au lithium encapsulé**
Eingekapselte lithium-elektrochemische Vorrichtung
Encapsulated lithium electrochemical device

(30) Priorité: 12.12.2007 FR 0759792
(43) Date de publication de la demande: 17.06.2009
(73) Titulaire: Commissariat à l'énergie atomique et aux énergies alternatives, 75015 Paris (FR); ST MICROELECTRONICS S.A., 92120 Montrouge (FR)
(72) Inventeur: Salot, M. Raphaël, 38250 Lans-en-Vercors (FR); Martin, M. Steve, 38160 St Sauveur (FR); Oukassi, M. Sami, 7000 Bizerte (TN)
(74) Mandataire: Vuillermoz, Bruno

(56) Documents cités:
- FR-A- 2 831 327
- FR-A- 2 862 437
- US-A1- 2004 029 311
- US-A1- 2006 286 448
- MARQUARDT K ET AL: "Assembly and Hermetic Encapsulation of Wafer Level Secondary Batteries" MICRO ELECTRO MECHANICAL SYSTEMS, 2006. MEMS 2006 ISTANBUL. 19TH IEEE INTERNATIONAL CONFERENCE ON ISTANBUL, TURKEY 22-26 JAN. 2006, PISCATAWAY, NJ, USA,IEEE, 22 janvier 2006 (2006-01-22), pages 954-957, XP010914403 ISBN: 978-0-7803-9475-9

## Description

### DOMAINE DE L'INVENTION

L'invention a trait au domaine des dispositifs électrochimiques au lithium, et plus particulièrement aux micro-batteries au lithium obtenues par le dépôt de films minces selon la technique du dépôt sous vide.

De telles micro-batteries sont plus particulièrement mises en oeuvre dans les cartes à puce, les étiquettes intelligentes (mesure récurrente de paramètre par des implants miniaturisés), l'alimentation d'horloge interne et des microsystèmes du type MEMS (pour l'expression anglo-saxonne *Micro Electro Mechanical System*).

### ETAT ANTERIEUR DE LA TECHNIQUE

Les micro-batteries au lithium sont aujourd'hui bien connues. Elles comportent traditionnellement un substrat sur lequel est déposé un empilement comportant successivement une cathode, un électrolyte comprenant du lithium, et une anode en général en lithium métallique, l'ensemble ainsi réalisé étant revêtu d'une enveloppe de protection aux fins d'éviter toute contamination extérieure.

De telles micro-batteries réalisées sous la forme de films minces par la technologie de la microélectronique, sont donc réalisées en utilisant des matériaux à base de lithium, tout particulièrement sensibles à l'environnement extérieur, et notamment à l'humidité, ainsi qu'à l'oxygène et à l'azote contenus dans l'air ambiant. Leur protection contre ces différents agents est déterminante pour leur durée de vie.

Le principe de fonctionnement de ces piles repose sur l'insertion et la désinsertion (ou intercalation-désintercalation) d'un ion de métal alcalin et typiquement de lithium dans l'électrode positive. Les principaux systèmes des micro-batteries utilisent comme espèce ionique l'ion lithium Li⁺ issu d'une électrode réalisée en lithium métallique. Les différents composants d'une telle micro-batterie, qu'il s'agisse des collecteurs de courant, des électrodes positives ou négatives, de l'électrolyte et de la couche de protection également appelée couche d'encapsulation, se présentent sous forme de couches minces obtenues par dépôt PVD (pour « *Physical Vapor Deposition"*) ou CVD (pour *« Chemical Vapor Deposition*"). L'épaisseur totale de l'empilement est typiquement de l'ordre de 15 µm.

La nature de ces différents composants peut être la suivante :
- les collecteurs : ils sont de nature métallique, et par exemple constitués de platine, chrome, or, titane, tungstène ou molybdène.
- l'électrode positive : elle peut être réalisée en LiCoO₂, LiNiO₂, LiMn₂O₄, CuS, CuS₂, WO_{y}S_{z}, TiO_{y}S_{z}, V₂O₅. En fonction du matériau choisi, un recuit thermique peut s'avérer nécessaire afin d'augmenter la cristallisation des films et leur propriété d'insertion au sein de l'empilement. C'est notamment le cas pour les oxydes lithiés. Cependant, certains matériaux amorphes, et notamment les oxysulfures de titane (TiO_{y}S_{z}), ne nécessitent pas un tel traitement tout en permettant une insertion élevée d'ions lithium Li⁺.
- l'électrolyte : celui-ci doit être un bon conducteur ionique mais un isolant électronique. La plupart du temps, on met en oeuvre un matériau vitreux à base d'oxyde de bore, d'oxyde de lithium ou de sel de lithium. Les électrolytes les plus performants sont à base de phosphate, et notamment le LIPON (composé lithié à base d'oxynitrure de lithium de phosphore) ou le LISIPON (composé lithié à base d'oxynitrure de lithium de phosphore et de silicium) ;
- l'électrode négative : celle-ci peut être constituée de lithium métallique déposé par évaporation thermique, ou un alliage métallique à base de lithium ou encore un composé d'insertion (SiTON, SnNₓ, InNₓ, SnO₂...).
- La couche d'encapsulation : celle-ci a pour objet, comme déjà dit, de protéger l'empilement actif constitutif de la micro-batterie de l'environnement extérieur et spécifiquement de l'humidité.

### Cette encapsulation peut résulter de deux technologies différentes :

Selon une première technologie, cette encapsulation est réalisée à partir de couches minces. On met ainsi en oeuvre généralement un empilement de couches selon une alternance verticale de couches différentes pour optimiser les propriétés barrière de l'ensemble. La stratégie la plus couramment retenue consiste à déposer une pré-encapsulation au moyen d'une couche inerte vis-à-vis du lithium et planarisante. Le matériau classiquement mise en oeuvre est un polymère, en l'espèce le parylène. La fonction barrière peut être renfoncée par le dépôt d'autres couches, notamment métalliques ou organosiliciés.

Cette technologie se heurte à un problème de durée de vie limitée. En effet, en raison de la perméation des gaz à travers l'encapsulation ainsi réalisée, outre des sollicitations mécaniques subies par l'encapsulation lors du cyclage électrochimique des micro-batteries (modifications volumiques), on affecte le lithium, qui s'oxyde ainsi assez rapidement.

Selon une seconde technologie, décrite dans FR2831327 on réalise l'encapsulation par capotage : une couche d'époxy est déposée en bordure de l'élément à protéger. Elle permet le collage d'un capot en verre par insolation aux rayonnements ultraviolets. Le scellement capot/substrat peut être réalisé par plusieurs procédés et peut mettre en jeu des matériaux différents, soit des métaux, soit des diélectriques.

On conçoit donc que cette technologie nécessite le dépôt d'une couche de scellement pour fixer le capot sur le substrat. Cette couche n'est cependant généralement pas optimisée pour les propriétés barrière, notamment à l'égard de l'humidité mais également de l'oxygène et de l'azote. Au surplus, l'utilisation du scellement se heurte à la problématique de sortie des collecteurs de courant hors de la cavité comprenant la micro-batterie. On doit de fait mettre en oeuvre un scellement non métallique, à tout le moins à proximité des collecteurs pour éviter les courts-circuits. Or, il s'avère que les matériaux métalliques sont les matériaux présentant le meilleur effet barrière de sorte que l'on conçoit aisément la problématique, dans la mesure où l'on doit se satisfaire d'un effet barrière peu satisfaisant. De fait, l'utilisation d'un scellement métallique n'est possible que dans le cas d'une connectique verticale de la micro-batterie, c'est à dire par la face arrière du substrat. Or, cette solution nécessite des étapes technologiques supplémentaires très complexes à mettre en oeuvre et donc surenchérissant les coûts de réalisation.

L'objectif visé par la présente invention est de disposer d'une encapsulation de telles micro-batteries à la fois efficace en terme d'effet barrière, et mettant en oeuvre une technologie de réalisation largement maîtrisée et ne nécessitant pas notamment d'étapes supplémentaires de dépôt d'un matériau spécifique au scellement.

L'invention met en oeuvre la technologie d'encapsulation par capotage.

### EXPOSE DE L'INVENTION

La présente invention vise donc un dispositif électrochimique au lithium comprenant un empilement de couches propres à constituer une micro-batterie déposé sur un substrat et encapsulé au moyen d'un capot de protection scellé sur ledit substrat. Ce dispositif est pourvu de deux collecteurs du courant généré par la micro-batterie et d'au moins une couche isolante inerte vis-à-vis du lithium, déposés sur ledit substrat.

Selon l'invention, le scellement du capot de protection sur le substrat est réalisé au moyen des couches constitutives des collecteurs de courant et de la ou des couches isolantes, ledit capot recevant des couches de même nature, positionnées selon le même ordre à l'aplomb des couches en question déposées sur le substrat, de sorte que lors du scellement du capot sur le substrat, les couches respectives déposées sur le capot et sur le substrat viennent en contact les unes avec les autres pour assurer le scellement effectif du capot sur le substrat.

Ce faisant, de par cette architecture particulière, on dispose d'une double barrière constituée à la fois par le matériau inerte isolant et le matériau conducteur.

Selon une caractéristique avantageuse, le scellement résulte d'une alternance de bandes réalisées en matériau isolant et en matériau conducteur, lesdites bandes résultant elles-mêmes du scellement des couches respectivement ménagées sur le substrat et sur le capot.

Selon une autre caractéristique avantageuse de l'invention, l'une au moins des bandes réalisée en matériau isolant est définie et délimitée par deux bandes parallèles de matériau conducteur.

Selon une autre caractéristique de l'invention, on rajoute des bandes supplémentaires en matériau conducteur s'étendant donc entre le substrat et le capot, de telle sorte à allonger le chemin de diffusion potentielle des gaz externes et de l'humidité.

Avantageusement, on optimise la tenue mécanique de l'assemblage par le dépôt préalable d'une couche d'accroche déposée respectivement sur le capot et sur le substrat, avant le dépôt de la couche isolante, cette couche d'accroche étant de type organosilicié et obtenue par dépôt de couches minces selon la technologie CVD.

Avantageusement, l'assemblage comporte également un getter destiné à piéger l'oxygène et l'humidité qui parviendrait à pénétrer dans la cavité permettant ainsi d'augmenter la durée de vie de l'ensemble. Ce getter peut être constitué de lithium métallique.

### BREVE DESCRIPTION DES FIGURES

La manière dont l'invention peut être réalisée et les avantages qui en découlent ressortiront mieux des exemples de réalisation qui suivent, donnés à titre indicatif et non limitatif à l'appui des figures annexées.
La figure 1A est une représentation schématique vue du dessus de l'assemblage conforme à l'invention, dont la figure 1B est une représentation schématique en section selon la ligne AA' de la figure 1A.
Les figures 2A, 2B, 2C illustrent les modes d'insertion des gaz extérieurs et de l'humidité susceptibles d'intervenir, les figures 2B et 2C illustrant des variantes de réalisation de l'invention permettant d'augmenter le chemin de diffusion de ces entités.
Les figures 3A et 3B sont des vues analogues aux figures 1A et 1B d'un autre mode de réalisation de l'invention mettant en oeuvre un getter.
Les figures 4A et 4B illustrent l'invention respectivement vue du dessus et vue en section transversale selon la ligne A,A' avec connexion de la micro-batterie par la face postérieure à travers le substrat.
Les figures 5A à 5G illustrent un mode de réalisation possible de l'assemblage conforme à l'invention.

### DESCRIPTION DETAILLEE DE L'INVENTION

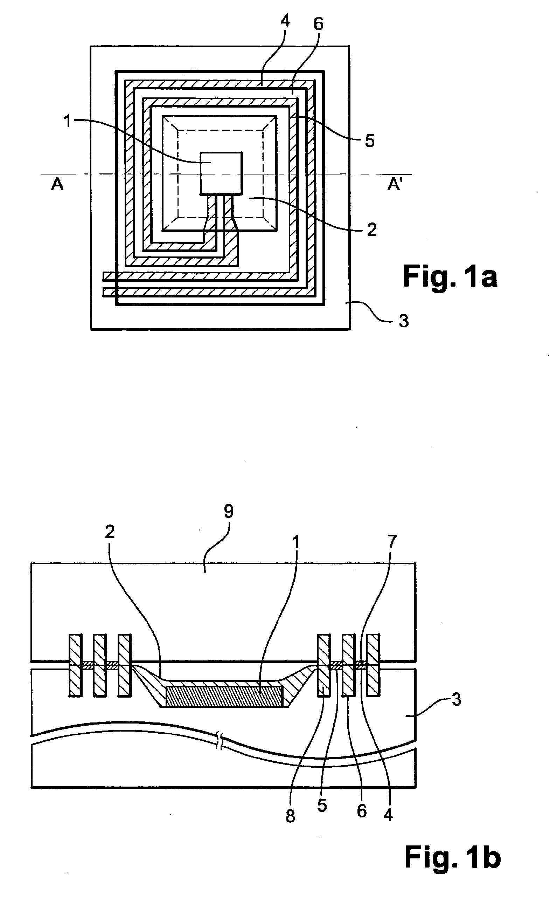

On a donc représenté en relation avec les figures 1A et 1B le principe général sous-tendant la présente invention.

Sur la figure 1A, on a représenté en vue du dessus le substrat **3** définissant une cavité **2** au sein de laquelle a été positionné l'empilement constitutif d'une micro-batterie au lithium **1.** Un tel empilement est bien connu de l'état antérieur de la technique, de sorte qu'il ne sera pas décrit ici en détail.

On a représenté par les références **4** et **5** les deux collecteurs de courant émanant de la micro-batterie **1,** et destinés à permettre la sortie du courant généré par la micro-batterie vers l'extérieur de l'assemblage. En l'espèce, les deux conducteurs forment une spirale entourant la micro-batterie **1.**

On a représenté en relation avec la figure 1B en section transversale l'assemblage de la figure 1A. On observe sur celle-ci un capot de protection **9** scellé sur le substrat **3** en périphérie de la cavité **2** recevant la micro-batterie **1.**

Ce scellement intervient, conformément à l'invention, d'une part par les couches constitutives des collecteurs de courant **4** et **5,** et d'autre part par plusieurs couches de pré-encapsulation respectivement **6, 7** et **8,** avec une alternance des couches conductrices, constitutives des collecteurs de courant et des couches isolantes constitutives des couches de pré-encapsulation, ainsi qu'on peut bien l'observer sur la figure 1B.

A cet effet, et ainsi que décrit ultérieurement plus en détail, on dépose sur le capot, préalablement à son positionnement et donc à son scellement sur le substrat **3,** une alternance desdites couches de telle sorte à permettre leur positionnement à l'aplomb des couches ménagées sur le substrat **3** lors de l'assemblage proprement dit.

En raison de cette architecture particulière, et notamment de la mise en oeuvre de cette alternance de couches isolantes et de couches conductrices, on augmente de manière significative le chemin et donc la longueur de diffusion des entités oxydantes susceptibles d'atteindre la micro-batterie, et notamment l'oxygène, la vapeur d'eau, voire l'azote. On augmente ainsi de manière significative la qualité de l'effet barrière résultant de cette encapsulation.

Au surplus, on aboutit, en raison de cette double nature de scellement, respectivement métal/métal et diélectrique/diélectrique, à une optimisation de cet effet barrière, puisque ainsi que précisé en préambule, le scellement métal/métal s'avère plus efficace pour lutter contre l'intrusion desdites entités oxydantes. Au surplus, un seul recuit thermique s'avère suffisant pour la réalisation de l'assemblage : les températures utilisées permettent à la fois la formation d'un eutectique et un collage respectivement dans la zone métallique et diélectrique du scellement.

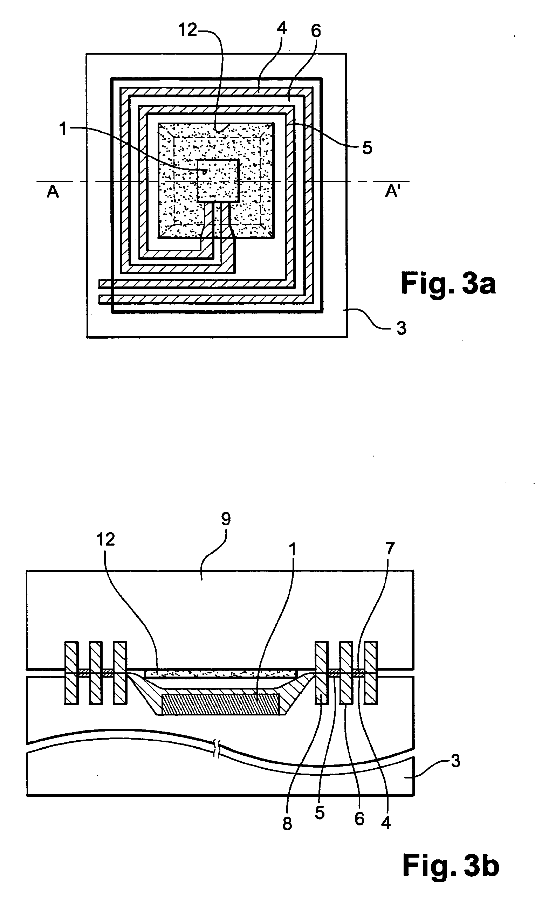

Avantageusement, et selon une forme de réalisation représentée en relation avec les figures 3A et 3B, on rajoute au sein de l'assemblage, un getter **12,** par exemple constitué lui-même de lithium. Ce getter est positionné sur la face interne du capot **9,** préalablement à son scellement sur le substrat **3.** Ce faisant, il est possible de procéder à son activation thermique, sans risquer d'affecter l'empilement constitutif de la micro-batterie.

Cette quantité de lithium supplémentaire, constitutive du getter, n'est bien évidemment pas destinée au fonctionnement de la micro-batterie **1.** En revanche, elle permet d'augmenter la durée de vie de ladite micro-batterie, du fait de sa consommation (son oxydation) par les entités oxydantes en priorité par rapport à la consommation du lithium constitutive à ladite micro-batterie.

Ainsi, afin de pouvoir disposer d'une durée de vie de dix ans, connaissant la cinétique de réaction d'oxydation du lithium, une épaisseur du getter **12** de 2µm est suffisante.

Par ailleurs, connaissant la perméation du parylène, matériau avantageusement constitutif de la couche de pré-encapsulation, c'est-à-dire de la couche diélectrique alternant avec les couches de conducteurs métalliques, afin de pouvoir garantir une durée de vie de dix ans de ladite micro-batterie, on doit pouvoir disposer d'un chemin de diffusion d'environ 25 mm.

Or, dans certain cas, on tente au maximum à réduire les dimensions latérales de la micro-batterie, et donc de l'assemblage qui la reçoit, pour permettre son intégration dans des dispositifs également d'encombrement réduit.

A cet effet, selon une variante de l'invention, on rajoute des bandes de matériaux conducteurs **10, 11,** induisant une augmentation de la longueur du chemin de diffusion des entités oxydantes.

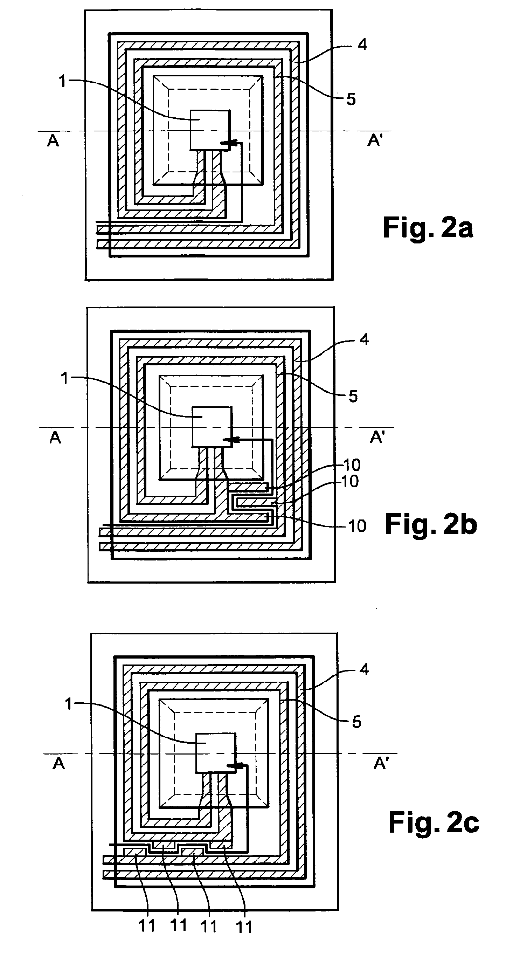

On a ainsi représenté sur les figures 2A, 2B et 2C cette diffusion, symbolisée sur chacune de ces figures par une flèche. On observe ainsi, qu'en rajoutant lesdites bandes de matériaux conducteurs **10, 11,** qui, comme celles constitutives des collecteurs électriques **4** et **5,** s'étendent entre le substrat et le capot, de manière telle qu'elles n'induisent pas de court-circuit entre les deux collecteurs **4** et **5,** on crée des chicanes augmentant significativement un tel chemin de diffusion (voir figures 2B et 2C). Cette architecture permet de concilier la réduction de la taille de l'assemblage, avec l'optimisation de la durée de vie de la micro-batterie qu'il intègre.

Selon une caractéristique avantageuse de l'invention, et afin d'optimiser la tenue mécanique de l'assemblage et donc le scellement du capot sur le substrat, on dépose préalablement au dépôt de la couche de matériau diélectrique, notamment de parylène, une couche dite d'accroche (non représentée), et par exemple de type organosilicié. Ce dépôt est obtenu par technique PECVD (« *Plasma Enhanced Chemical Vapor Deposition* »).

Certaines micro-batteries sont susceptibles de ne pas comporter d'anode métallique. Celles-ci sont communément appelées « Li free ». Dans ce cas, une couche de métal bloquant le lithium est déposée, le lithium venant alors se déposer sur cette couche. Durant la charge, le lithium migre depuis l'électrode positive vers le métal, et vient s'y électrodéposer pour former une couche de lithium faisant office d'électrode négative. Pendant la décharge, la migration se fait en sens contraire, à savoir de la couche de lithium électrodéposée vers l'électrode positive.

Dans cette hypothèse, il est possible de mettre en oeuvre des températures plus élevées pour assurer l'opération de scellement. Ainsi, il peut être fait appel aux couples binaires suivants reportés dans le tableau 1 ci-après.

| | | | | | | |
|---|---|---|---|---|---|---|
| Couples de diffusion | In/Sn | PPX/PPX | Au/In | Sn/Ag | Au/Sn | Au/Si |
| Composition (en poids %) | 52/48 | 1/1 | 33/66 | 95/5 | 80/20 | 80/20 |
| Température de scellement (°C) | 140 | 150 | 180 | 221 | 240 | 365 |

tableau dans lequel PPX désigne le parylène.

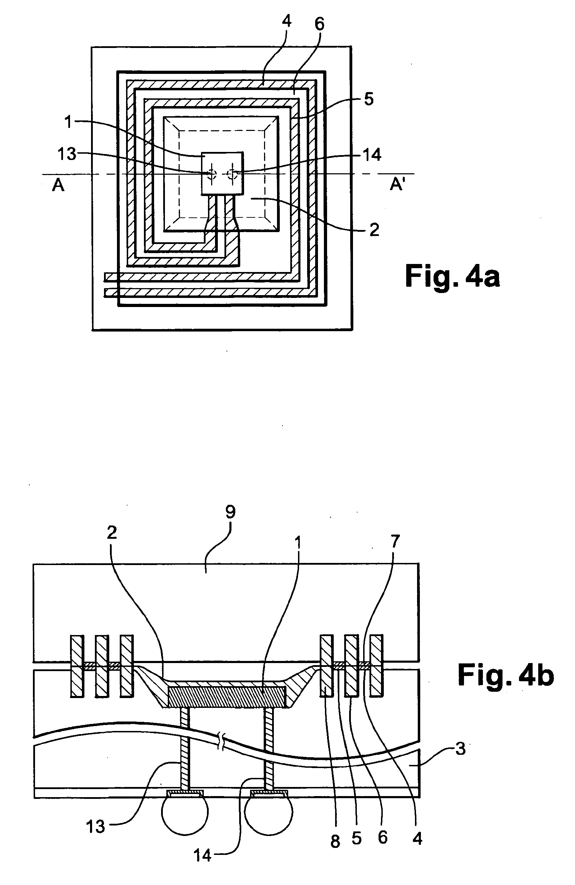

Selon une autre caractéristique de l'invention, il peut également être envisagé, et ce de manière connue, d'assurer la connexion électrique de la micro-batterie 1 en face arrière du substrat, tel que représenté sur les figures 4A et 4B. Dans celle-ci, les collecteurs électriques **13** et **14** traversent le substrat de manière à venir se connecter sur les plots de connexion, par exemple d'un microactivateur que la micro-batterie est destinée à faire fonctionner. Ceci ne remet nullement en cause le principe de scellement de la présente invention.

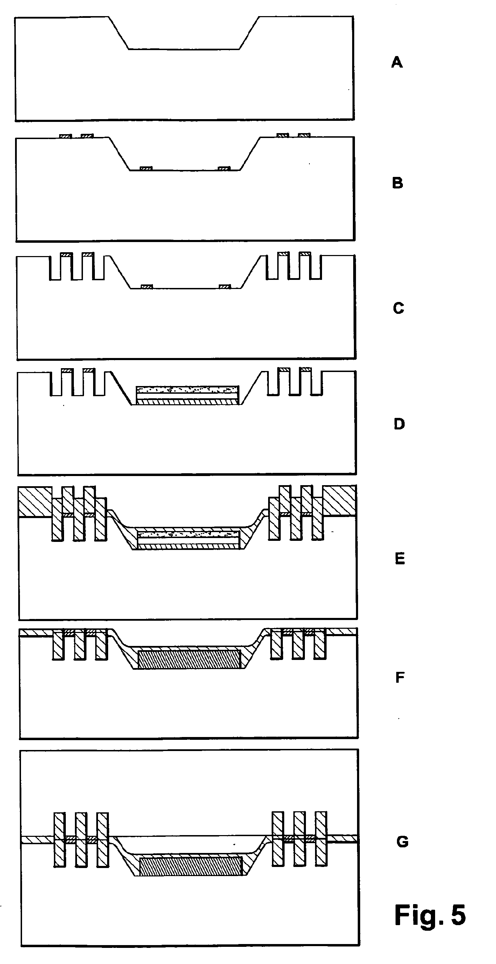

On a représenté en relation avec la figure 5 différentes étapes susceptibles d'être mises en oeuvre pour aboutir à l'assemblage conforme à la présente invention.

Figure 5A : on part d'un substrat, par exemple constitué de silicium et éventuellement revêtu d'une couche de passivation SiO₂ + Si₃N₄.

Ce substrat est gravé, par exemple par de la potasse KOH, afin de définir une cavité **2** destinée à recevoir ensuite la micro-batterie proprement dite.

Figure 5B : Des collecteurs de courant, par exemple constitués d'une couche Ti/Au (50/200 nm) sont ensuite déposés par « patterning » (transfert de motifs), réalisé par exemple par masquage mécanique ou par photolithographie puis gravure, sur le fond de ladite cavité, et en sa périphérie.

Figure 5C : Lors de l'étape suivante, on procède à une gravure du substrat, par exemple par gravure ionique profonde, par gravure par faisceau d'ions, par gravure humide type KOH, définissant un certain nombre de gorges destinés à recevoir ultérieurement le parylène, sans toutefois affecter les zones au niveau desquelles sont déposés les collecteurs.

Figure 5D : Lors de l'étape suivante, on procède alors au dépôt de l'empilement constitutif de la micro-batterie proprement dite, et ce par patterning, comme décrit ci-dessus.

Cette batterie est par exemple du type TiOS (2 µm)/Lipon (1,5 µm)/Li (3 µm). Alternativement, cette microbatterie peut être LiCoO₂ (2 µm)/Lipon (1,5 µm)/Ge (100 nm).

Figure SE : On dépose alors une couche de pré-encapsulation, constituée de parylène par PVD ou CVD. Ce dépôt intervient d'une part au sein des gorges réalisées lors de l'étape de la figure 5C, d'autre part sur la micro-batterie. Ce dépôt étant conforme, les reliefs sont préservés.

Figure 5F : Un polissage mécanochimique est réalisé sur la surface libre du substrat, afin de rendre la surface plane et de mettre à niveau les couches de parylène et de métal.

Figure 5G : Le capot est ensuite présenté et le scellement est effectué.

Des opérations identiques sont également réalisées sur la face interne du capot **9,** de telle sorte à faire coïncider les zones revêtues respectivement de parylène et de matériau conducteur avec les zones correspondantes du substrat lors de l'assemblage subséquent dudit capot sur le substrat.

Le capot peut être constitué d'un substrat silicium comportant des couches de parylène de **5** µm d'épaisseur et d'indium de 1 µm, déposées, comme déjà dit, en face interne. L'indium peut être remplacé par exemple par de l'étain.

Le collage s'effectue à 180°C sous une pression de 1,8 MPa pendant 30 minutes dans le cas de la mise en oeuvre comme empilement de TiOS (2 µm)/Lipon (1,5 µm)/Li (3 µm).

Dans le cas où l'empilement est constitué de LiCoO₂ (2 µm)/Lipon (1,5 µm)/Ge (100 nm), c'est à dire selon la technologie « Li free », le collage est réalisé par diffusion en phase solide In/Au à 240°C rendu possible dans ce cas par l'absence de lithium métallique.

Le procédé et l'assemblage de l'invention présentent un certain nombre d'avantages par rapport à l'état antérieur de la technique. Ainsi, et notamment dans le cadre de la mise en oeuvre d'une micro-batterie comprenant une électrode négative en lithium métallique, c'est-à-dire à bas point de fusion et très sensible à l'atmosphère, l'invention permet d'obtenir :
■ une batterie protégée mécaniquement d'une part, et d'autre part vis-à-vis de l'atmosphère par un capot réalisé en un matériau susceptible d'être choisi dans une large gamme : silicium, verre, céramique ...
■ le capotage peut être réalisé à basse température, en tout cas compatible avec la température de fusion du lithium et compatible avec les technologies sur substrats flexibles, par exemple du type polyimide ou polyéthylèneterephtalate (PET), ou sur substrats durs amincis type silicium ;
■ les matériaux mis en oeuvre pour le scellement présentent un effet barrière efficace à l'encontre des entités oxydantes, susceptibles d'optimiser la durée de vie des micro-batteries ;
■ le procédé d'encapsulation permet en outre de définir un volume d'expansion dans la cavité **2** autorisant les modifications volumiques liées au fonctionnement de la batterie (cycle de charge/décharge) ; en outre ce volume permet la mise en oeuvre d'un matériau getter, notamment sur la face interne du capot, permettant de piéger l'oxygène ou l'humidité susceptible de pénétrer dans la cavité et corollairement d'augmenter la durée de vie de la micro-batterie. Au surplus, ce matériau getter peut le cas échéant être activé en température avant l'étape de collage, puisqu'il est encore intégré au capot.

## Revendications

1. Dispositif électrochimique au lithium comprenant un empilement de couches propres à constituer une micro-batterie (1) déposé sur un substrat (3) et encapsulé au moyen d'un capot de protection (9) scellé sur ledit substrat, comportant deux collecteurs (4, 5) du courant généré par la micro-batterie et au moins une couche isolante (6, 7, 8) inerte vis-à-vis du lithium, lesdits collecteurs et la ou les couches isolantes étant déposés sur ledit substrat, ***caractérisé* en ce que** le scellement du capot de protection (9) sur le substrat (3) est réalisé au moyen des couches constitutives des collecteurs de courant (4, 5) et de la ou des couches isolantes (6, 7, 8), ledit capot recevant à cet effet des couches de même nature, positionnées selon le même ordre à l'aplomb des couches en question déposées sur le substrat, de sorte que lors du scellement du capot sur le substrat, les couches respectives déposées sur le capot et sur le substrat viennent en contact les unes avec les autres pour assurer le scellement effectif du capot sur le substrat.

2. Dispositif électrochimique au lithium selon la revendication 1, ***caractérisé* en ce que** le scellement du capot de protection (9) sur le substrat (3) est réalisé au moyen d'une double barrière, constituée à la fois par le matériau isolant constitutif de la ou des couches isolantes et par le matériau conducteur constitutif des collecteurs de courant.

3. Dispositif électrochimique au lithium selon l'une des revendications 1 et 2, ***caractérisé* en ce que** le scellement du capot de protection (9) sur le substrat (3) résulte d'une alternance de bandes (6, 7, 8) réalisées en matériau isolant et de bandes (4, 5) réalisées en matériau conducteur, lesdites bandes résultant du scellement des couches respectivement ménagées sur le substrat et sur le capot.

4. Dispositif électrochimique au lithium selon la revendication 3, ***caractérisé* en ce que** l'une (6) au moins des bandes (6, 7, 8) réalisées en matériau isolant est définie et délimitée par deux bandes (4, 5) parallèles réalisées en matériau conducteur.

5. Dispositif électrochimique au lithium selon l'une des revendications 3 et 4, ***caractérisé* en ce que** des bandes supplémentaires (10, 11) réalisées en matériau conducteur s'étendant entre le substrat et le capot, de telle sorte à allonger le chemin de diffusion potentielle des gaz externes et de l'humidité au sein du dispositif.

6. Dispositif électrochimique au lithium selon l'une des revendications 1 à 5, ***caractérisé* en ce que** une couche d'accroche est préalablement déposée respectivement sur le capot et sur le substrat, avant le dépôt de la ou des couches isolantes.

7. Dispositif électrochimique au lithium selon la revendication 6, ***caractérisé* en ce que** la couche d'accroche est de type organosilicié et est obtenue par dépôt de couches minces selon la technologie CVD.

8. Dispositif électrochimique au lithium selon l'une des revendications 1 à 7, ***caractérisé* en ce qu'**il comporte un getter (12), destiné à piéger l'oxygène et l'humidité qui parviendrait à pénétrer dans la cavité définie par le capot de protection et le substrat.

9. Dispositif électrochimique au lithium selon la revendication 8, ***caractérisé* en ce que** le getter est constitué par du lithium métallique.

10. Dispositif électrochimique au lithium selon l'une des revendications 8 et 9, ***caractérisé* en ce que** le getter est positionné sur la face interne du capot de protection, préalablement au scellement de ce dernier sur le substrat.

## Claims

1. Lithium electrochemical device comprising a stack of layers suitable for constituting a micro-battery (1) deposited on a substrate (3) and encapsulated using a protective cap (9) sealed onto said substrate, comprising two collectors (4, 5) of the current generated by the micro-battery and at least one insulating layer (6, 7, 8) inert as regards lithium, said collectors and the insulating layer or layers being deposited on said substrate, ***characterized* in that** the protective cap (9) is sealed onto the substrate (3) using the layers constituting the current collectors (4, 5) and the insulating layer or layers (6, 7, 8), said cap receiving to this end layers of the same nature, positioned in the same order in line with the relevant layers deposited on the substrate, so that when the cap is sealed onto the substrate, the respective layers deposited on the cap and on the substrate come into contact with each other so as to provide the actual seal of the cap on the substrate.

2. Lithium electrochemical device as claimed in claim 1, ***characterized* in that** the protective cap (9) is sealed onto the substrate (3) using a double barrier, constituted both by the insulating material constituting the insulating layer or layers and by the conductive material constituting the current collectors.

3. Lithium electrochemical device as claimed in one of claims 1 and 2, ***characterized* in that** the sealing of the protective cap (9) on the substrate (3) is the result of an alternation of strips (6, 7, 8) made of an insulating material and strips (4, 5) made of a conductive material, said strips resulting from sealing the layers provided on the substrate and on the cap respectively.

4. Lithium electrochemical device as claimed in claim 3, ***characterized* in that** at least one (6) of the strips (6, 7, 8) made of insulating material is defined and delimited by two parallel strips (4, 5) made of conductive material.

5. Lithium electrochemical device as claimed in one of claims 3 and 4, ***characterized* in that** additional strips (10, 11) made of conductive material extend between the substrate and the cap, so as to lengthen the potential diffusion path of the external gases and moisture within the device.

6. Lithium electrochemical device as claimed in one of claims 1 to 5, ***characterized* in that** a primer layer is previously deposited on the cap and on the substrate respectively, prior to the deposition of the insulating layer or layers.

7. Lithium electrochemical device as claimed in claim 6, ***characterized* in that** the primer layer is of the organosilicon type and is obtained by deposition of thin layers using CVD technology.

8. Lithium electrochemical device as claimed in one of claims 1 to 7, ***characterized* in that** it comprises a getter (12), intended to trap any oxygen and moisture that might penetrate into the cavity defined by the protective cap and the substrate.

9. Lithium electrochemical device as claimed in claim 8, ***characterized* in that** the getter is constituted by metallic lithium.

10. Lithium electrochemical device as claimed in one of claims 8 and 9, ***characterized* in that** the getter is positioned on the inner surface of the protective cap, prior to the latter being sealed onto the substrate.

## Patentansprüche

1. Elektrochemische Lithium-Vorrichtung, umfassend einen Stapel von Schichten, die geeignet sind, eine Mikrobatterie (1) zu bilden, der auf ein Substrat (3) aufgebracht ist und mit Hilfe einer auf dem Substrat versiegelten Schutzkappe (9) verkapselt ist, umfassend zwei Kollektoren (4, 5) für den von der Mikrobatterie erzeugten Strom und mindestens einer gegenüber Lithium inerten Isolierschicht (6, 7, 8), wobei die Kollektoren und die Isolierschicht oder -schichten auf das Substrat aufgebracht sind, **dadurch gekennzeichnet, dass** die Versiegelung der Schutzkappe (9) auf dem Substrat (3) mit Hilfe der die Stromkollektoren (4, 5) bildenden Schichten und der Isolierschicht oder - schichten (6, 7, 8) hergestellt ist, wobei die Kappe zu diesem Zweck Schichten derselben Art erhält, die in derselben Reihenfolge senkrecht über den betreffenden auf das Substrat aufgebrachten Schichten so positioniert sind, dass die auf die Kappe und auf das Substrat aufgebrachten Schichten bei der Versiegelung der Kappe auf dem Substrat miteinander in Kontakt kommen, um die wirksame Versiegelung der Kappe auf dem Substrat zu gewährleisten.

2. Elektrochemische Lithium-Vorrichtung nach Anspruch 1, **dadurch gekennzeichnet, dass** die Versiegelung der Schutzkappe (9) auf dem Substrat (3) mit Hilfe einer doppelten Sperre ausgeführt ist, die gleichzeitig aus dem die Isolierschicht oder -schichten bildenden isolierenden Werkstoff und aus dem die Stromkollektoren bildenden leitenden Werkstoff gebildet ist.

3. Elektrochemische Lithium-Vorrichtung nach einem der Ansprüche 1 und 2, **dadurch gekennzeichnet, dass** die Versiegelung der Schutzkappe (9) auf dem Substrat (3) sich aus einem Wechsel von aus einem isolierenden Werkstoff hergestellten Bändern (6, 7, 8) und von aus einem leitenden Werkstoff hergestellten Bändern (4, 5) ergibt, wobei diese Bänder sich aus der Versiegelung der auf dem Substrat und auf der Kappe vorgesehenen Schichten ergibt.

4. Elektrochemische Lithium-Vorrichtung nach Anspruch 3, **dadurch gekennzeichnet, dass** mindestens eines (6) der aus einem isolierenden Werkstoff hergestellten Bänder (6; 7, 8) durch zwei parallele, aus einem leitenden Werkstoff hergestellte Bänder (4, 5) definiert und begrenzt ist.

5. Elektrochemische Lithium-Vorrichtung nach einem der Ansprüche 3 und 4, **dadurch gekennzeichnet, dass** zusätzliche aus einem leitenden Werkstoff hergestellt Bänder (10, 11) sich zwischen dem Substrat und der Kappe so erstrecken, dass der potentielle Diffusionsweg der äußeren Gase und der Feuchtigkeit in das Innere der Vorrichtung verlängert wird.

6. Elektrochemische Lithium-Vorrichtung nach einem der Ansprüche 1 bis 5, **dadurch gekennzeichnet, dass** vor dem Aufbringen der Isolierschicht oder -schichten auf die Kappe bzw. auf das Substrat zuvor eine Haftschicht aufgebracht wird.

7. Elektrochemische Lithium-Vorrichtung nach Anspruch 6, **dadurch gekennzeichnet, dass** die Haftschicht siliciumorganisch ist und durch Aufbringen von Dünnschichten nach der CVD-Technologie erhalten wird.

8. Elektrochemische Lithium-Vorrichtung nach einem der Ansprüche 1 bis 7, **dadurch gekennzeichnet, dass** sie einen Getter (12) umfasst, der dazu bestimmt ist, Sauerstoff und Feuchtigkeit einzufangen, die in den durch die Schutzkappe und das Substrat gebildeten Hohlraum gelangt sein könnten.

9. Elektrochemische Lithium-Vorrichtung nach Anspruch 8, **dadurch gekennzeichnet, dass** der Getter aus metallischem Lithium gebildet ist.

10. Elektrochemische Lithium-Vorrichtung nach einem der Ansprüche 8 und 9, **dadurch gekennzeichnet, dass** der Getter auf der Innenseite der Schutzkappe vor deren Versiegelung auf dem Substrat positioniert wird.
